# EUROPEAN PATENT SPECIFICATION

(11) **EP 3 670 974 B1**
(45) Date of publication and mention of the grant of the patent: **07.07.2021**
(21) Application number: 19216142.0
(22) Date of filing: 13.12.2019
(51) Int. Cl.: F16H 63/34

(54) **ELECTROMECHANICAL PARKING-LOCK ACTUATOR**
ELEKTROMECHANISCHER PARKSPERRENAKTUATOR
ACTIONNEUR ÉLECTROMÉCANIQUE DE VERROUILLAGE DE STATIONNEMENT

(30) Priority: 20.12.2018 DE 102018133269
(43) Date of publication of application: 24.06.2020
(73) Proprietor: FTE automotive GmbH, 96106 Ebern (DE)
(72) Inventor: LENKE, Sonja, D-96106 Ebern (DE)
(74) Representative: Cardon, Nicolas

(56) References cited:
- EP-A1- 3 279 523
- US-A1- 2018 154 881

## Description

The present invention relates to an electromechanical parking-lock actuator according to the generic portion of Claim 1. A parking-lock actuator of such a type serves for actuating a parking lock arranged in a motor vehicle, which, in turn, has been provided to prevent an unintentional rolling away of the motor vehicle in a locking position. In particular, the invention relates to electromechanical parking-lock actuators such as are employed in the automobile industry, for instance in electrically driven motor vehicles or in motor vehicles with hybrid transmissions, with automated transmissions or with automatic transmissions.

Parking locks are needed, in particular, when an inhibiting action of the stationary drive (motor) does not suffice for the purpose of holding the motor vehicle in place or cannot be utilised, for instance on account of normally open coupling elements. A locking of the driveline is then undertaken, as a rule, via a parking-lock gear arranged in torsion-resistant manner on an output shaft of the gearbox and exhibiting a toothing, which gear can be latched at the toothing in positive manner by means of a parking-lock pawl which is swivel-mounted on a parallel axle. In this case, the parking-lock pawl has been biased by the force of a return spring either away from the parking-lock gear into an unlocked position or towards the parking-lock gear into the locking position. For the purpose of swivelling the parking-lock pawl contrary to the force of the return spring, in addition to hydraulic parking-lock actuators electric or electromechanical parking-lock actuators may also be employed, which serve to generate a linear motion or a motion extending at least substantially linearly, via which an actuating element - which, for instance, may have been designed in the form of a cam or a cone or a carrier with two rollers - is capable of being moved against the parking-lock pawl, in order to swivel the latter. In order to ensure that the parking lock can lock in place and consequently prevents the motor vehicle from rolling away even when the parking-lock pawl, upon actuation, comes to bear against a tooth of the parking-lock gear without entering into positive closure with the toothing, furthermore an energy-storage device (advancing spring) has been provided on the actuating element, which in the case of a rolling of the motor vehicle advances the parking-lock pawl via the actuating element, so that said pawl enters into engagement with the toothing of the parking-lock gear. Over and above this, in many cases an emergency-actuation mechanism has to be provided, which in the event of a failure of the actuator enables an engaging of the parking lock.

Electromechanical parking-lock actuators with these functions are known from the state of the art. Printed publication DE 102 12 038 A1 discloses an electromechanical parking-lock actuator of the aforementioned type. Said actuator includes an electric motor and a coupling device, acting by positive closure and/or by force closure, with two coupling parts supported so as to be capable of being rotated or swivelled, of which a first coupling part is actively connected to the motor shaft of the electric motor via a gearing mechanism, whereas the second coupling part is supported so as to be axially relocatable relative to the first coupling part and has been provided to drive an actuating element acting on the locking pawl of a parking lock, in particular via interposed transmission means such as an actuating rod. In addition, the parking-lock actuator includes a switching device - constituted, for instance, by an electromagnet - for optional opening or closing of the coupling device, said second coupling part being actively connected to the electric motor via the first coupling part and the gearing mechanism in the case of a closed coupling device, and being decoupled from the electric motor in the case of an open coupling device. The coupling device consequently constitutes a switchable separable coupling.

One disadvantage of this state of the art consists in the fact that an unlocking of the parking lock is possible only by energising of the electromagnet or by activation of a redundant hydraulic switching device. By this means, the coupling device is closed, so that the parking-lock pawl can be swivelled, by the electric motor via the gearing mechanism and the closed coupling and also via the actuating rod, into the unlocked position out of its locking position latching the parking-lock gear, contrary to the force of a return spring acting here in the locking direction. But also for the purpose of holding the parking-lock pawl in the unlocked position the electromagnet or the redundant hydraulic switching device has to continue to remain energised or activated, respectively, in order that the coupling remains closed. Only in the closed state of the coupling is a rotating of the coupling parts prevented in the case of a stationary electric motor, in consequence of the self-retention of the gearing mechanism, realised here as a worm gear, and as a result the parking-lock pawl is held in its unlocked position contrary to the force of the return spring. As soon as the electromagnet or the redundant hydraulic switching device is/are no longer energised or activated, respectively, a separating spring arranged between the two coupling parts opens the coupling, so that the second coupling part is freely rotatable and the return spring swivels the parking-lock pawl back again into its locking position. In the course of travel of the motor vehicle, the electromagnet or the redundant hydraulic switching device therefore has to be permanently energised or activated, respectively, which represents an additional consumption of energy. An emergency-actuation mechanism is not provided in this case.

Publication EP 3 279 523 A1, which is the starting-point for the generic portion of Claim 1, discloses an electromechanical parking-lock actuator of the aforementioned type. Publication discloses the preamble of the claim 1. One disadvantage of such electromechanical parking-lock actuator is that the auxiliary actuation device or the switching device for disengagement of the coupling device is an electric motor, which is offset from the actuation axis. It involves a complex mechanism for uncoupling and does not make the actuator compact.

The object underlying the present invention is to propose, for the actuation of a parking lock in a motor vehicle, an electromechanical parking-lock actuator of the aforementioned type, designed as simply as possible, which in operation displays a lower consumption of energy.

In accordance with the invention, this object is achieved by an electromechanical parking-lock actuator according to Claim 1. Advantageous configurations and expedient further developments of the invention arise out of the dependent claims.

In the case of an electromechanical parking-lock actuator intended for actuating a parking lock in a motor vehicle, which actuator includes an electric motor and a coupling device, acting by positive closure and/or by force closure, with two coupling parts supported so as to be capable of being rotated or swivelled, of which a first coupling part is actively connected to the motor shaft of the electric motor via a gearing mechanism, whereas the second coupling part is supported so as to be rotatable and axially relocatable relative to the first coupling part and serves to drive, directly or indirectly via interposed elements, an actuating element, acting on a locking pawl of a parking lock, of the parking-lock actuator for the purpose of locking or for the purpose of unlocking the parking lock, said parking-lock actuator further including a switching device for optional opening of the coupling device, and the second coupling part in the closed state of the coupling device being actively connected to the electric motor via the first coupling part, whereas in the open state of the coupling device the active connection between the second coupling part and the electric motor has been interrupted or separated, the parking-lock actuator exhibits, in accordance with the invention, a spring element acting on the coupling device, which biases the coupling device into its closed state, said coupling device being opened in the event of an action of the switching device against the biasing force of the spring element, so that the actuating element, acting on the locking pawl of a parking lock of the motor vehicle, of the parking-lock actuator can then be moved independently of the electric motor in the case of an open coupling.

A substantial advantage in the case of the design according to the invention consists in the fact that an activation of the switching device of the coupling device is not required either for the purpose of actuating the parking-lock actuator in the course of unlocking the parking lock, or for the purpose of holding the parking lock in the unlocked position. In the normal mode, merely the electric motor of the parking-lock actuator has to be actuated for an adjustment of the parking lock into the locking position or into the unlocked position, whereas the switching device has to be activated only for the purpose of separating the coupling device, enabling an emergency actuation for the purpose of engaging the parking lock, particularly in the event of a failure of the electric motor. The parking-lock actuator according to the invention is therefore distinguished in operation by a lower consumption of energy.

Over and above this, the parking-lock actuator according to the invention can be produced inexpensively in a simple structural design and is easy to assemble. Its compact style of construction enables, in addition, a simple accommodation even in cramped construction-space conditions.

The parking-lock actuator includes an actuator shaft, supported so as to be capable of being rotated or swivelled, which is actively connected to the second coupling part of the coupling device and which drives the actuating element, acting on the locking pawl of the parking lock, of the actuator either directly or indirectly via interposed elements. In this way, a direct active contact, known from the state of the art, of an actuating rod bearing the actuating element against the second coupling part is avoided, so that at least the second coupling part can be realised more easily.

The switching device of the coupling device includes an electromagnet. In the event of an energising of the coil of the electromagnet against the biasing force of the spring element, the coupling device is then opened, as a result of which the active connection between the second coupling part and the electric motor is nullified. In this case, a particularly compact style of construction is obtained, in that the coil of the electromagnet surrounds the actuator shaft.

According to a particularly preferred embodiment of the invention, the coupling device serving as separable coupling is constituted by an axially switchable dog coupling acting in positive manner.

In this case, it is favourable if the dog coupling exhibits, on both coupling parts, in each instance between 8 and 40, in particular between 16 and 32, preferentially 24, dogs or projections interacting with one another in positive manner. In order to enable a disengaging of the coupling that is as easy as possible, the flanks of the dogs or projections that are capable of being brought into contact with one another have advantageously been bevelled at an angle that depends on the coefficient of friction prevailing between them, in particular at an angle of at least approximately 5°.

It is particularly advantageous if the first part of the coupling device is supported on the actuator shaft so as to be capable of being rotated, whereas the axially relocatable second part of the coupling device is connected to the actuator shaft in torsion-resistant manner. The first coupling part is driven in rotating manner by the electric motor via the gearing mechanism which preferentially includes a self-retaining worm gear. In the case of a closed coupling, this rotary motion is transmitted to the second coupling part and consequently to the actuator shaft connected thereto in torsion-resistant manner.

In this case, according to another particularly preferred embodiment of the invention the second part of the coupling device may be supported on the actuator shaft in torsion-resistant and also axially relocatable manner by means of a linear ball bearing, the balls of which are contained, on the one hand, in outwardly pointing axial grooves of the actuator shaft and also, on the other hand, in inwardly directed axial grooves of the second coupling part. In this way, the linear ball bearing enables both the transmission of torques between the second coupling part and the actuator shaft, and the axial relocation of the second coupling part between a first axial position, which is defined by the closed state of the coupling device, and a second axial position, in which the coupling device is open. Advantageously, the second axial position in this case is defined by an axial stop borne by the actuator shaft, in particular by an axial bearing or by a disc held axially in position on the actuator shaft.

A particularly compact structural form of the parking-lock actuator can, moreover, be obtained by the electromagnet being realised as a plunger magnet, in which case the second part of the coupling device constitutes the axially relocatable plunger which is capable of being drawn at least partly into the axially fixed coil of the electromagnet.

It is favourable, in addition, if the spring element is constituted by a helical compression spring which is arranged on the actuator shaft coaxially relative to the coupling device.

In this case it is an advantage, particularly with regard to the compactness of the parking-lock actuator, if the helical compression spring is arranged with respect to its axial position at least partly within the coil of the electromagnet. The coil accordingly overlaps axially with at least one part of the helical spring.

According to a particularly preferred embodiment of the invention, the parking-lock actuator includes a spring device which acts upon or biases the actuator shaft in a direction of rotation in which the actuator shaft drives or moves the actuating element acting on the locking pawl of the parking lock in such a manner that the locking pawl is transferred into the locking position. In this way, the parking lock of the motor vehicle is accordingly activated when the coupling device is open.

It is particularly advantageous in this case if the spring device includes at least one spiral spring surrounding the actuator shaft. The spiral spring arranged coaxially on the actuator shaft is preferentially arranged axially on the side of the coupling device situated opposite the electromagnet. Said spiral spring engages the actuator shaft with its inner end, whereas its outer end is supported on a portion of the casing of the parking-lock actuator or has been fastened thereto.

The spring device advantageously constitutes a secondary drive which in the case of an open coupling device rotates or swivels the actuator shaft independently of the electric motor, in order thereby to transfer the locking pawl into the locking position via the actuating element. In this way, even in the event of a malfunction of the electric motor, for instance in the event of failure of its energy supply, in an emergency mode in the case of an open coupling device the parking lock can be locked by the energy stored in the spring device. If the malfunction has been eliminated, in the event of an actuation of the electric motor, executed subsequently in the normal mode for the purpose of unlocking the parking lock, the spring device can once again be biased into the previous state. In an alternative embodiment, in the event of a malfunction of the electric motor in an emergency mode in the case of an open coupling device the secondary drive constituted by the spring device can also be used to unlock the parking lock by means of the energy stored in the spring device.

According to another preferred embodiment of the invention, the parking-lock actuator includes a casing - in particular, of multipart construction - in which at least the electric motor, the two coupling parts of the coupling device and the gearing mechanism are received, and in which the actuator shaft is supported, in which case a free end of the actuator shaft protrudes from the casing and is actively connected to the actuating element there outside the casing, in order to be able to drive the actuating element for its action on the locking pawl of the parking lock.

It is particularly advantageous in this case if a printed circuit board is arranged in the casing of the parking-lock actuator, via which at least the electric motor and an electric switching device of the coupling device, in particular the electromagnet, are capable of being triggered, said printed circuit board being connected to a common electrical interface integrated into the parking-lock actuator, via which the electric motor and the electric switching device or, to be more precise, the electromagnet are each capable of being linked to a current-source and/or to a control unit. Preferentially, a position-detector may also have been provided in the parking-lock actuator, which includes at least one sensor element likewise capable of being linked via the printed circuit board and the common electrical interface, which, together with a signal element connected indirectly or directly to the actuator shaft, can detect the position of the actuator shaft.

Further advantages and features of the invention result from the following description relating to the embodiment examples represented in the drawings.

The figures show:
Figure 1: schematic representation of a parking lock with an electromechanical parking-lock actuator,
Figure 2: perspectival view of an electromechanical parking-lock actuator according to the invention,

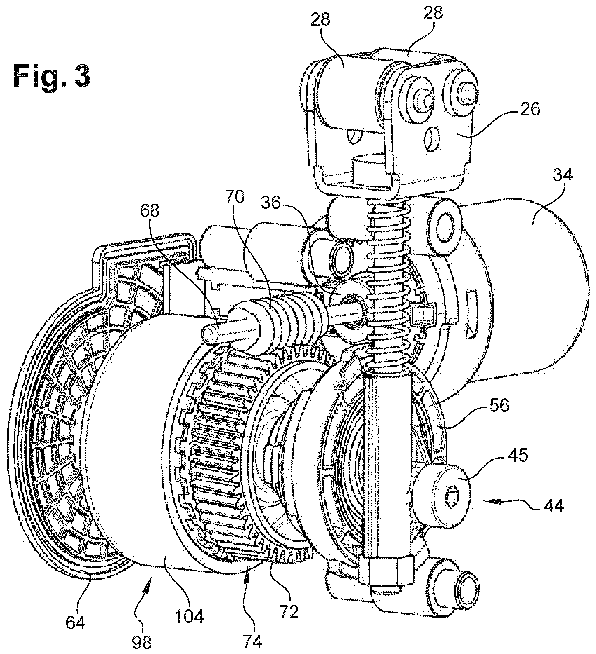

Figure 3: the parking-lock actuator from Figure 2 with casing partly removed,
Figure 4: a sectional view of the parking-lock actuator from Figure 2, and

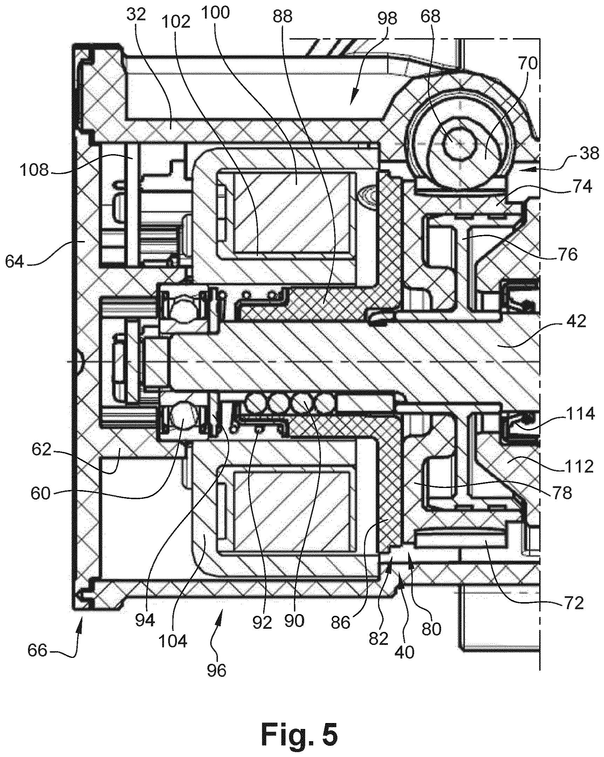

Figure 5: a detail enlargement from Figure 4.

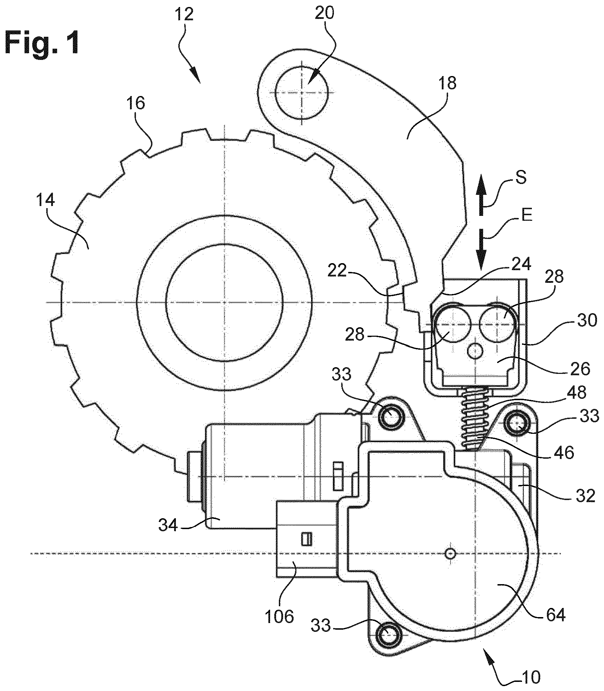

Figure 1 shows an electromechanical parking-lock actuator 10 which has been provided to actuate a parking lock 12 arranged in a motor vehicle. The parking lock 12 exhibits, in a manner known as such, a parking-lock gear 14 which is arranged in torsion-resistant and axially fixed manner on a gearbox shaft, not represented, of a motor-vehicle gearbox and possesses a toothing 16 on its outer periphery. For the purpose of positive arresting of the driveline of the motor vehicle, the parking lock 12 further includes a locking pawl 18 which is articulated to a gearbox casing, not shown here, so as to be capable of being swivelled about a swivel axis 20, and exhibits a latching tooth 22 which in the event of a swivelling of the locking pawl 18 about the swivel axis 20 is capable of engaging in positive manner with the toothing 16 of the parking-lock gear 14. The locking pawl 18 is engaged by a return spring, not shown here, which is supported with respect to the gearbox casing or suspended thereon and which biases the locking pawl 18 away from the parking-lock gear 14 into an unlocked position.

For the purpose of swivelling the locking pawl 18 about the swivel axis 20, an actuating element 26 is provided which in the embodiment example represented exhibits two rollers 28 and by means of the parking-lock actuator 10 can optionally be axially displaced in a locking direction S or in an unlocking direction E, as indicated by arrows in Figures 1, 2 and 4. The two rollers 28 are guided in a guide element 30 which is fixed with respect to the gearbox casing, so that in the event of an axial motion of the actuating element 26 in the locking direction S one of the rollers 28 impinges on a bevelled contact surface 24 of the locking pawl 18, whereas the other roller 28 is supported on the guide element 30. As a result, the locking pawl 18 is swivelled contrary to the force of the return spring, not represented in Figure 1, in the clockwise direction, rotating about the swivel axis 20, in order to bring the latching tooth 22 into engagement in positive manner with the toothing 16 of the parking-lock gear 14. In the event of an axial motion of the actuating element 26 in the unlocking direction E, on the other hand, the roller 28 is withdrawn from the contact surface 24, with the result that, in consequence of the force of the return spring in Figure 1, the locking pawl 18 is swivelled in the anti-clockwise direction, rotating about the swivel axis 20, the latching tooth 22 being removed from the toothing 16 and thereby coming out of engagement with the parking-lock gear 14.

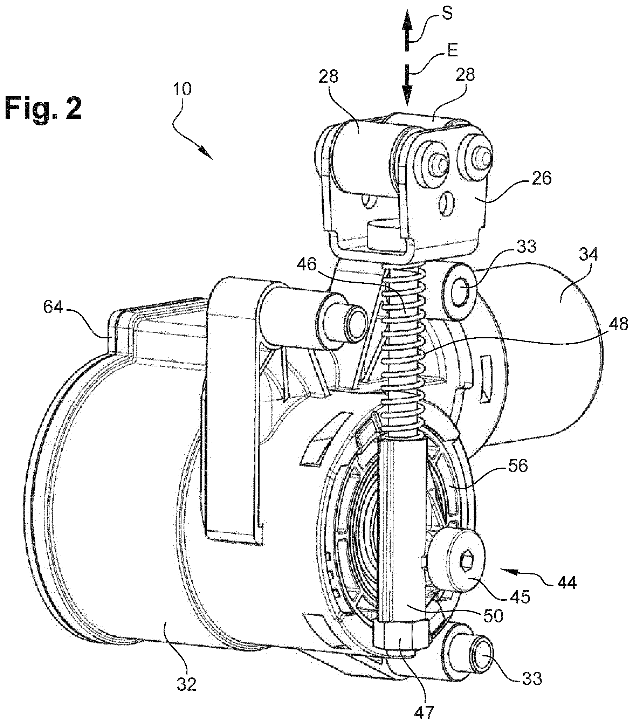

The parking-lock actuator 10 according to the invention shown in the embodiment example in Figure 2 includes an actuator casing 32, preferentially injection-moulded from a synthetic material, on which fastening lugs 33 have been moulded which serve in the motor vehicle, in a manner known as such, for fastening the parking-lock actuator 10 to a gearbox wall (not represented), for instance by means of screws. A motor casing 34, realised here separately, has been fastened to the actuator casing 32 via a bayonet joint, said motor casing receiving an electric motor 36 in its interior. Via a gearing mechanism 38 and a coupling device 40, the electric motor 36 serves to drive in rotating manner an actuator shaft 42 which via an eccentric device 44 converts the rotary motion into an axial motion, extending at least approximately axially, of an actuating rod 46 which bears the actuating element 26 for the parking lock 12. In a normal mode of the parking-lock actuator 10, the actuating rod 46 can be driven by the electric motor 36 in the locking direction S or conversely in the unlocking direction E. In this connection, an advancing spring 48, realised here as a helical compression spring, surrounding the actuating rod 46 biases the actuating rod 46 or, to be more precise, the actuating element 26 with respect to a guide sleeve 50 of the eccentric device 44 in the direction of the locking position. Both the parking lock 12 and the parking-lock actuator 10 according to the invention may have been arranged within a gearbox casing, not shown here.

In the following, the interior of the parking-lock actuator 10 according to the invention will be described in more detail. The actuator shaft 42 exhibits, at its anterior end facing towards the actuating rod 46, a shoulder 52 of enlarged diameter, which constitutes a crank web for the eccentric device 44. The shaft shoulder 52 is supported via an anterior bearing 54, realised here as a ball bearing, which is received in a bearing plate 56. The bearing plate 56 is fastened by means of a bayonet joint 58 in an anterior casing aperture of the actuator casing 32 and seals off the latter at the front. At its rear end region, the actuator shaft 42 is supported via a rear bearing 60 which is received in an internal projection 62 of a casing cover 64, by which the actuator casing 32 is sealed at the rear. In this connection, the casing cover 64 is connected to the actuator casing 32 in liquid-tight manner via positive-closure elements 66 with interpolated sealing means, and/or by a welded joint.

In the embodiment example represented here, the gearing mechanism 38 consists of a self-retaining worm gear, in which a worm 70 fastened to the output shaft 68 of the electric motor 36 drives a peripheral toothing 72 of a gearwheel 74. In consequence of the self-retention, the gearwheel 74 cannot be turned if the electric motor 36 in a current-free state has been switched off. The gearwheel 74 is capable of being rotated relative to the actuator shaft 42 via a carrier 76 constituting a radial bearing, and is supported on the actuator shaft 42 so as to be axially fixed in position with respect to the actuator casing 32.

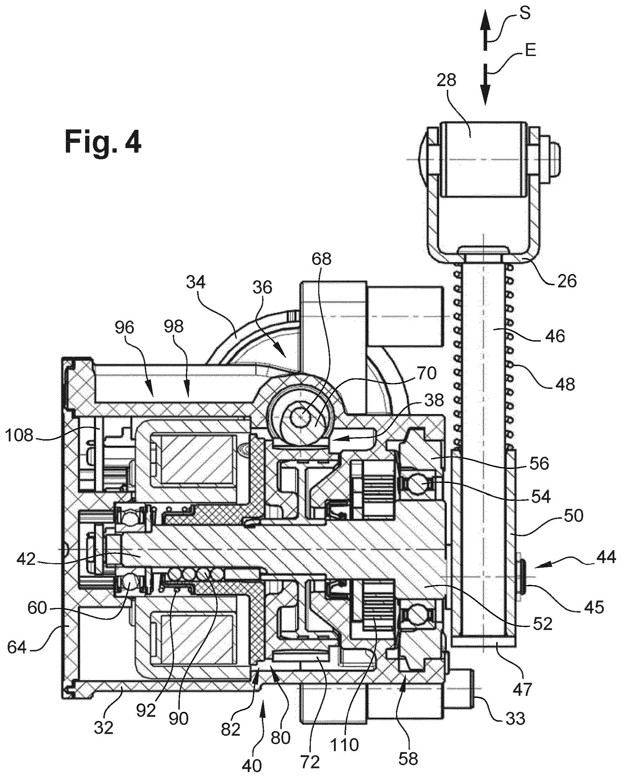

On its side facing towards the casing cover 64, the gearwheel 74 constitutes with a disc-shaped annular region 78 a first coupling part 80 which interacts with a second coupling part 82, arranged directly alongside it, of a coupling device 40. The coupling device 40 has been realised here as a switchable separable coupling, acting in positive manner, in the form of a dog coupling. For this purpose, the second coupling part 82 includes a tubular sleeve portion 88, formed integrally with a disc-shaped flange portion 86, which by means of a linear ball bearing 90 is axially relocatable and is attached to the actuator shaft 42 in torsion-resistant manner. On the front faces facing towards one another, both the annular region 78 of the first coupling part 80 and the flange portion 86 of the second coupling part 82 each exhibit a plurality of dogs, not represented diagrammatically here. If the second coupling part 82 in the position represented in Figure 4 bears axially against the first coupling part 80, the coupling device 40 has been closed. The dogs of both coupling parts 80 and 82 are then in engagement with one another, so that a torque is capable of being transmitted in both directions of rotation between the two coupling parts 80 and 82. If, on the other hand, the second coupling part 82 is removed from the first coupling part 80 by axial relocation on the actuator shaft 42, the dogs of both coupling parts 80 and 82 come out of engagement, so that the coupling device 40 has been opened and no torque can be transmitted any longer between the two coupling parts 80 and 82, or, to be more precise, both coupling parts 80 and 82 are freely rotatable relative to one another. In particular, in the case of an open coupling device 40 the actuator shaft 42 connected in torsion-resistant manner to the second coupling part 82, and consequently also the actuating element 26 connected to said actuator shaft via the eccentric device 44 and the actuating rod 46, can accordingly be moved independently of the first coupling part 80 and of the electric motor 36 actively connected to said coupling part via the self-retaining worm gear.

On the coupling device 40 there is arranged a spring element 92, constituted here by a helical compression spring, which biases the coupling device 40 in accordance with the invention into its closed state represented in Figure 4. For this purpose, the helical compression spring 92 surrounding the actuator shaft 42 coaxially is supported, on the one hand, via an annular sheet-metal part on a step formed externally on the sleeve portion 88 and, on the other hand, on a disc 94 held in position in front of the rear bearing 60. Against the biasing force of this spring element 92, the coupling device 40 can be opened by a switching device 96 which here is capable of being activated electrically. This switching device 96 is constituted here by an annular electromagnet 98 - that is to say, by an electromagnetic actuator. For this purpose, in a manner known as such a coil 100 has been wound on a coil-carrier 102 which, in turn, is accommodated in a magnet casing 104. The annular magnet casing 104 surrounding the actuator shaft 42 coaxially is received in the actuator casing 32 and centred on a region of the outer ring of the rear bearing 60 protruding axially forwards, and also held in position in the axial direction between a step formed on the inside on the actuator casing 32 and the projection 62 of the casing cover 64. The axially relocatable second coupling part 82 has been realised here at least with constituent parts consisting of iron, and as a result constitutes an iron core which in the event of an energising of the coil 100 as plunger is drawn so far into the coil 100 against the biasing force of the spring element 92 until the free end of the sleeve portion 88 bears against the disc 94 constituting an axial stop. In this end position, the disc-shaped flange portion 86 of the second coupling part 82, the outer periphery of which is able to enter the annular magnet casing 104 in non-contacting manner, is still located at a certain axial spacing from the coil 100 and the coil-carrier 102, so that here no contact obtains, even in the event of an energising of the coil 100, and consequently no magnetic holding forces arise that would prevent or render difficult a torsion of the second coupling part 82 and of the actuator shaft 42 connected to said coupling part in torsion-resistant manner. In the axial direction the helical compression spring 92 is located completely within the magnet casing 104 of the electromagnet 98.

The parking-lock actuator 10 has a common electrical interface 106 integrated into the actuator casing 32, which is connected to a printed circuit board 108 situated in the rear region of the actuator casing 32 in front of the casing cover 64. Via the interface 106 and the printed circuit board 108, both the electric motor 36 and the electric switching device 96 constituted by the electromagnet 98 can be linked to an external control unit and controlled via the latter. In addition, yet further electrical components of the parking-lock actuator 10 - for instance, a position-detector, not represented diagrammatically here, for capturing the angular position of the actuator shaft 42 - can likewise be linked via the printed circuit board 108 and the common electrical interface 106.

For the purpose of forming a secondary drive which in the event of a malfunction of the primary drive constituted by the electric motor 36 can, in an emergency mode in the case of an open coupling device 40, rotate the actuator shaft 42 also independently of the electric motor 36, in the actuator casing 32 a spring device 110 has been provided which here is constituted by a spiral spring. The spiral spring 110 is located in the anterior region alongside the shaft shoulder 52 and is fastened to the actuator shaft 42 on the inside. After several turns surrounding the actuator shaft 42 in the form of a spiral, the outer end region of the spring device 110 has been fastened to a portion of the actuator casing 32 adjacent to the bearing plate 56. In this way, the spiral spring 110 acts upon the actuator shaft 42 in a direction of rotation in which, in the case of an open coupling device 40, said actuator shaft moves the actuating element 26 in the locking direction S via the actuating rod 46, so that the locking pawl 18 is swivelled into the locking position by the energy stored in the spring device 110, and in this way the parking lock 12 is activated and the motor vehicle is immobilised. In this connection, the locking pawl 18 already reaches its locking position before the eccentric device 44 passes through its upper dead-centre position facing towards the locking pawl 18, so that the locking pawl 18 is held reliably in the locking position by the energy stored in the spring device 110 and also continuing to act on the actuator shaft 42.

When the malfunction has been eliminated, in the normal mode the parking lock 12 can be unlocked again by the electric motor 36, as a result of which the spiral spring 110 is also biased again into the previous state at the same time.

Axially between the spring device 110 and the carrier 76 of the gearwheel 74, a shaft seal 114 interacting with the actuator shaft 42 is arranged on a rib 112, protruding radially inwards, of the actuator casing 32. The shaft seal 114 seals the interior space of the actuator casing 32 (on the left of the rib 112 in Figure 4), situated on the other side of the rib 112, viewed from the eccentric device 44, which, in particular, contains the coupling device 40, the electromagnet 98 and the printed circuit board 108 - with, where appropriate, electrical components present thereon - in liquid-tight manner against the actuator shaft 42. In this way, the penetrating of oil, for instance, to which the parking-lock actuator 10 may have been exposed, depending on the location of its attachment in the motor vehicle, is prevented.

## Claims

1. Electromechanical parking-lock actuator (10) for actuating a parking lock (12) in a motor vehicle, said actuator including an electric motor (36) and a coupling device (40), acting by positive closure and/or by force closure, with two coupling parts (80, 82) supported so as to be capable of being rotated or swivelled, of which a first coupling part (80) is actively connected to the motor shaft (68) of the electric motor (36) via a gearing mechanism (38), whereas the second coupling part (82) is supported so as to be axially relocatable relative to the first coupling part (80) and serves to drive, directly or indirectly, an actuating element (26) acting on a locking pawl (18) of a parking lock (12), wherein the parking-lock actuator (10) further includes a switching device (96) for optional opening of the coupling device (40), the second coupling part (82) being actively connected to the electric motor (36) via the first coupling part (80) in the case of a closed coupling device (40), and being decoupled from the electric motor (36) in the case of an open coupling device (40), wherein the parking-lock actuator (10) includes an actuator shaft (42) supported so as to be capable of being rotated or swivelled, which is actively connected to the second coupling part (82) of the coupling device (40) and which drives the actuating element (26) acting on the locking pawl (18) of the parking lock (12), the parking-lock actuator (10) includes a spring element (92) acting on the coupling device (40), which biases the coupling device (40) into its closed state, **characterized in that** the switching device (96) of the coupling device (40) includes an electromagnet (98) with a coil (100) surrounding the actuator shaft (42), wherein in the event of an energising of the electromagnet (98) against the biasing force of the spring element (92) the coupling device (40) is opened, so that the actuating element (26) is capable of being moved independently of the electric motor (36).

2. Parking-lock actuator (10) according to Claim 1, **characterized in that** the coupling device (40) is a dog coupling acting by positive closure.

3. Parking-lock actuator (10) according to Claim 2, **characterized in that** the dog coupling exhibits on both coupling parts (80, 82) in each instance between 8 and 40, in particular between 16 and 32, preferentially 24, dogs interacting with one another in positive manner, wherein the flanks, capable of being brought into contact with one another, of the dogs have been bevelled at an angle dependent on the coefficient of friction prevailing between them, in particular at an angle of 5°.

4. Parking-lock actuator (10) according to Claim 3, **characterized in that** the first coupling part (80) is supported on the actuator shaft (42) so as to be capable of being rotated, whereas the second coupling part (82) is connected to the actuator shaft (42) in torsion-resistant manner.

5. Parking-lock actuator (10) according to Claim 4, **characterized in that** the second coupling part (82) is supported by means of a linear ball bearing (90) in torsion-resistant manner and also so as to be axially relocatable on the actuator shaft (42) between a first axial position, defined by the closed state of the coupling device (40), and a second axial position in which the coupling device (40) is open and which is defined by an axial stop (94) or an axial bearing.

6. Parking-lock actuator (10) according to Claim 1 in conjunction with Claim 4 or 5, **characterized in that** the second coupling part (82) constitutes a plunger of the electromagnet (98).

7. Parking-lock actuator (10) according to one of the preceding claims, **characterized in that** the spring element (92) is constituted by a helical compression spring which is arranged on the actuator shaft (42) coaxially relative to the coupling device (40).

8. Parking-lock actuator (10) according to Claim 7 in conjunction with Claim 1 or 6, **characterized in that** the helical compression spring (92) is arranged at least partly within the coil (100) of the electromagnet (98).

9. Parking-lock actuator (10) according to one of the preceding claims, **characterized in that** it includes a spring device (110) which acts upon the actuator shaft (42) in a direction of rotation in which the actuator shaft (42) drives the actuating element (26) in a direction of motion (S, E) transferring the locking pawl (18) into a locking position (S) or into an unlocked position (E).

10. Parking-lock actuator (10) according to Claim 9, **characterized in that** the spring device (110) includes at least one spiral spring surrounding the actuator shaft (42).

11. Parking-lock actuator (10) according to Claim 9 or 10, **characterized in that** the spring device (110) constitutes a secondary drive which in the case of an open coupling device (40) rotates or swivels the actuator shaft (42) independently of the electric motor (36), in order to transfer the locking pawl (18) into a locking position (S) or into an unlocked position (E) via the actuating element (26).

12. Parking-lock actuator (10) according to one of the preceding claims, **characterized in that** it includes a casing (32, 34) - in particular, of multipart construction - in which at least the electric motor (36), the two coupling parts (80, 82) of the coupling device (40) and the gearing mechanism (38) are received and in which the actuator shaft (42) is supported, wherein a free end of the actuator shaft (42) protrudes from the casing (32, 34) and is actively connected to the actuating element (26).

13. Parking-lock actuator (10) according to Claim 12, **characterized in that** a printed circuit board (108) is arranged in the casing (32, 34), via which the electric motor (36) and the switching device (96) of the coupling device (40), are capable of being triggered, and **in that** the printed circuit board (108) is connected to a common electrical interface (106) of the parking-lock actuator (10), via which the electric motor (36) and the switching device (96) are each capable of being linked to a current-source and/or to a control unit.

## Patentansprüche

1. Elektromechanischer Parksperrenaktuator (10) zur Betätigung einer Parksperre (12) in einem Kraftfahrzeug, umfassend einen Elektromotor (36) und eine formschlüssig und/oder kraftschlüssig wirkende Kupplungseinrichtung (40) mit zwei drehbar oder schwenkbar gelagerten Kupplungsteilen (80, 82), von denen ein erster Kupplungsteil (80) über einen Getriebemechanismus (38) mit der Motorwelle (68) des Elektromotors (36) wirkverbunden ist, während der zweite Kupplungsteil (82) relativ zum ersten Kupplungsteil (80) axial verschiebbar gelagert ist und dazu dient, unmittelbar oder mittelbar ein auf eine Sperrklinke (18) einer Parksperre (12) einwirkendes Betätigungselement (26) anzutreiben,
wobei der Parksperrenaktuator (10) ferner eine Schalteinrichtung (96) zum wahlweisen Öffnen oder Schließen der Kupplungseinrichtung (40) umfasst, wobei der zweite Kupplungsteil (82) bei geschlossener Kupplungseinrichtung (40) über den ersten Kupplungsteil (80) mit dem Elektromotor (36) wirkverbunden und bei geöffneter Kupplungseinrichtung (40) von dem Elektromotor (36) entkoppelt ist, wobei
der Parksperrenaktuator (10) eine drehbar oder schwenkbar gelagerte Aktuatorwelle (42) umfasst, die mit dem zweiten Kupplungsteil (82) der Kupplungseinrichtung (40) wirkverbunden ist, und die das auf die Sperrklinke (18) der Parksperre (12) einwirkende Betätigungselement (26) antreibt, der Parksperrenaktuator (10) ein auf die Kupplungseinrichtung (40) einwirkendes Federelement (92) umfasst, welches die Kupplungseinrichtung (40) in ihren geschlossenen Zustand vorspannt, **dadurch gekennzeichnet, dass** die Schalteinrichtung (96) der Kupplungseinrichtung (40) einen Elektromagnet (98) mit einer die Aktuatorwelle (42) umgebenden Spule (100) umfasst, wobei die Kupplungseinrichtung (40) bei einer Bestromung des Elektromagnets (98) gegen die Vorspannkraft des Federelements (92) geöffnet ist, so dass das Betätigungselement (26) unabhängig von dem Elektromotor (36) bewegbar ist.

2. Parksperrenaktuator (10) nach Anspruch 1, **dadurch gekennzeichnet, dass** die Kupplungseinrichtung (40) eine formschlüssig wirkende Klauenkupplung ist.

3. Parksperrenaktuator (10) nach Anspruch 2, **dadurch gekennzeichnet, dass** die Klauenkupplung an beiden Kupplungsteilen (80, 82) jeweils zwischen 8 und 40, insbesondere zwischen 16 und 32, vorzugsweise 24 formschlüssig miteinander zusammenwirkende Klauen aufweist, wobei die miteinander in Kontakt bringbaren Flanken der Klauen in einen von dem zwischen ihnen herrschenden Reibungskoeffizienten abhängigen Winkel, insbesondere in einen Winkel von 5°, abgeschrägt sind.

4. Parksperrenaktuator (10) nach Anspruch 3, **dadurch gekennzeichnet, dass** der erste Kupplungsteil (80) drehbar auf der Aktuatorwelle (42) gelagert ist, während der zweite Kupplungsteil (82) drehfest mit der Aktuatorwelle (42) verbunden ist.

5. Parksperrenaktuator (10) nach Anspruch 4, **dadurch gekennzeichnet, dass** der zweite Kupplungsteil (82) mittels eines Linearkugellagers (90) drehfest sowie zwischen einer durch den geschlossenen Zustand der Kupplungseinrichtung (40) definierten ersten Axialposition und einer zweiten Axialposition, in der die Kupplungseinrichtung (40) geöffnet ist und die durch einen Axialanschlag (94) oder ein Axiallager definiert ist, axial verschiebbar auf der Aktuatorwelle (42) gelagert ist.

6. Parksperrenaktuator (10) nach Anspruch 1 in Verbindung mit Anspruch 4 oder 5, **dadurch gekennzeichnet, dass** der zweite Kupplungsteil (82) einen Tauchanker des Elektromagnets (98) bildet.

7. Parksperrenaktuator (10) nach einem der vorherigen Ansprüche, **dadurch gekennzeichnet, dass** das Federelement (92) durch eine Schraubendruckfeder gebildet ist, die koaxial zur Kupplungseinrichtung (40) auf der Aktuatorwelle (42) angeordnet ist.

8. Parksperrenaktuator (10) nach Anspruch 7 in Verbindung mit Anspruch 1 oder 6, **dadurch gekennzeichnet, dass** die Schraubendruckfeder (92) zumindest teilweise innerhalb der Spule (100) des Elektromagnets (98) angeordnet ist.

9. Parksperrenaktuator (10) nach einem der vorherigen Ansprüche, **dadurch gekennzeichnet, dass** er eine Federeinrichtung (110) umfasst, welche die Aktuatorwelle (42) in einer Drehrichtung beaufschlagt, in der die Aktuatorwelle (42) das Betätigungselement (26) in eine die Sperrklinke (18) in eine Sperrstellung (S) oder in eine entsperrte Stellung (E) überführende Bewegungsrichtung (S, E) antreibt.

10. Parksperrenaktuator (10) nach Anspruch 9, **dadurch gekennzeichnet, dass** die Federeinrichtung (110) mindestens eine die Aktuatorwelle (42) umgebende Spiralfeder umfasst.

11. Parksperrenaktuator (10) nach Anspruch 9 oder 10, **dadurch gekennzeichnet, dass** die Federeinrichtung (110) einen Sekundärantrieb bildet, der bei geöffneter Kupplungseinrichtung (40) die Aktuatorwelle (42) unabhängig von dem Elektromotor (36) dreht oder schwenkt, um die Sperrklinke (18) über das Betätigungselement (26) in eine Sperrstellung (S) oder in eine entsperrte Stellung (E) zu überführen.

12. Parksperrenaktuator (10) nach einem der vorherigen Ansprüche, **dadurch gekennzeichnet, dass** er ein insbesondere mehrteilig ausgeführtes Gehäuse (32, 34) umfasst, in dem zumindest der Elektromotor (36), die beiden Kupplungsteile (80, 82) der Kupplungseinrichtung (40) und der Getriebemechanismus (38) aufgenommen sind und in dem die Aktuatorwelle (42) gelagert ist, wobei ein freies Ende der Aktuatorwelle (42) aus dem Gehäuse (32, 34) herausragt und mit dem Betätigungselement (26) wirkverbunden ist.

13. Parksperrenaktuator (10) nach Anspruch 12, **dadurch gekennzeichnet, dass** in dem Gehäuse (32, 34) eine Leiterplatte (108) angeordnet ist, über die der Elektromotor (36) und die Schalteinrichtung (96) der Kupplungseinrichtung (40) ansteuerbar sind, und dass die Leiterplatte (108) mit einer gemeinsamen elektrischen Schnittstelle (106) des Parksperrenaktuators (10) verbunden ist, über die der Elektromotor (36) und die elektrische Schalteinrichtung (96) jeweils an eine Stromquelle und/oder an eine Steuereinheit anschließbar sind.

## Revendications

1. Actionneur électromécanique de verrouillage de stationnement (10) pour l'actionnement d'un verrouillage de stationnement (12) dans un véhicule automobile, ledit actionneur comprenant un moteur électrique (36) et un dispositif d'accouplement (40) agissant par fermeture à action directe et/ou par fermeture forcée, deux parties d'accouplement (80, 82) étant supportées de sorte à pouvoir tourner ou pivoter, dont une première partie d'accouplement (80) est reliée activement à l'arbre moteur (68) du moteur électrique (36) par l'intermédiaire d'un mécanisme de transmission (38), tandis que la seconde partie d'accouplement (82) est supportée de sorte à pouvoir être déplacée axialement par rapport à la première partie d'accouplement (80) et sert à l'entraînement direct ou indirect d'un élément d'actionnement (26) agissant sur un cliquet de verrouillage (18) d'un verrouillage de stationnement (12), l'actionneur de verrouillage de stationnement (10) comprenant en outre un dispositif de commutation (96) pour l'ouverture facultative du dispositif d'accouplement (40), la seconde partie d'accouplement (82) étant reliée activement au moteur électrique (36) par l'intermédiaire de la première partie d'accouplement (80) dans le cas d'un dispositif d'accouplement (40) fermé, et étant séparée du moteur électrique (36) dans le cas d'un dispositif d'accouplement (40) ouvert, l'actionneur de verrouillage de stationnement (10) comprenant un arbre d'actionneur (42) supporté de sorte à pouvoir être tourné ou pivoté, qui est relié activement à la seconde partie d'accouplement (82) du dispositif d'accouplement (40) et qui entraîne l'élément d'actionnement (26) agissant sur le cliquet de verrouillage (18) du verrouillage de stationnement (12), l'actionneur de verrouillage de stationnement (10) comprenant un élément ressort (92) agissant sur le dispositif d'accouplement (40), qui sollicite le dispositif d'accouplement (40) dans son état fermé, **caractérisé en ce que** le dispositif de commutation (96) du dispositif d'accouplement (40) comprend un électroaimant (98) avec une bobine (100) entourant l'arbre d'actionneur (42), en cas d'excitation de l'électroaimant (98) contre la force de sollicitation de l'élément ressort (92) le dispositif d'accouplement (40) étant ouvert, de sorte que l'élément d'actionnement (26) puisse être déplacé indépendamment du moteur électrique (36) .

2. Actionneur de verrouillage de stationnement (10) selon la revendication 1, **caractérisé en ce que** le dispositif d'accouplement (40) est un accouplement à griffes agissant par fermeture à action directe.

3. Actionneur de verrouillage de stationnement (10) selon la revendication 2, **caractérisé en ce que** l'accouplement à griffes présente sur les deux parties d'accouplement (80, 82) à chaque fois entre 8 et 40, en particulier entre 16 et 32, de préférence 24, griffes interagissant l'une avec l'autre de manière positive, les flancs, pouvant être amenés en contact l'un avec l'autre, des griffes ayant été biseautés à un angle dépendant du coefficient de friction prévalant entre eux, en particulier à un angle de 5°.

4. Actionneur de verrouillage de stationnement (10) selon la revendication 3, **caractérisé en ce que** la première partie d'accouplement (80) est supportée sur l'arbre d'actionneur (42) de sorte à pouvoir être tournée, tandis que la seconde partie d'accouplement (82) est reliée à l'arbre d'actionneur (42) de manière résistant à la torsion.

5. Actionneur de verrouillage de stationnement (10) selon la revendication 4, **caractérisé en ce que** la seconde partie d'accouplement (82) est supportée au moyen d'un roulement à billes linéaire (90) de manière résistant à la torsion et également de manière à pouvoir être déplacée axialement sur l'arbre d'actionneur (42) entre une première position axiale, définie par l'état fermé du dispositif d'accouplement (40), et une seconde position axiale dans laquelle le dispositif d'accouplement (40) est ouvert et qui est définie par une butée axiale (94) ou un roulement axial.

6. Actionneur de verrouillage de stationnement (10) selon la revendication 1 en liaison avec la revendication 4 ou 5, **caractérisé en ce que** la seconde partie d'accouplement (82) constitue un plongeur de l'électroaimant (98).

7. Actionneur de verrouillage de stationnement (10) selon l'une des revendications précédentes, **caractérisé en ce que** l'élément ressort (92) est constitué par un ressort de compression hélicoïdal qui est disposé sur l'arbre d'actionneur (42) coaxialement par rapport au dispositif d'accouplement (40).

8. Actionneur de verrouillage de stationnement (10) selon la revendication 7 en liaison avec la revendication 1 ou 6, **caractérisé en ce que** le ressort de compression hélicoïdal (92) est disposé au moins partiellement à l'intérieur de la bobine (100) de l'électroaimant (98).

9. Actionneur de verrouillage de stationnement (10) selon l'une des revendications précédentes, **caractérisé en ce qu'**il comprend un dispositif à ressort (110) qui agit sur l'arbre d'actionnement (42) dans un sens de rotation dans lequel l'arbre d'actionnement (42) entraîne l'élément d'actionnement (26) dans un sens de déplacement (S, E) transférant le cliquet de verrouillage (18) dans une position de verrouillage (S) ou dans une position de déverrouillage (E).

10. Actionneur de verrouillage de stationnement (10) selon la revendication 9, **caractérisé en ce que** le dispositif à ressort (110) comprend au moins un ressort en spirale entourant l'arbre d'actionneur (42).

11. Actionneur de verrouillage de stationnement (10) selon la revendication 9 ou 10, **caractérisé en ce que** le dispositif à ressort (110) constitue un entraînement secondaire qui, dans le cas d'un dispositif d'accouplement ouvert (40), fait tourner ou pivoter l'arbre d'actionneur (42) indépendamment du moteur électrique (36), afin de transférer le cliquet de verrouillage (18) dans une position de verrouillage (S) ou dans une position de déverrouillage (E) par l'intermédiaire de l'élément d'actionnement (26).

12. Actionneur de verrouillage de stationnement (10) selon l'une des revendications précédentes, **caractérisé en ce qu'**il comprend un boîtier (32, 34) - en particulier d'une construction en plusieurs parties - dans lequel au moins le moteur électrique (36), les deux parties d'accouplement (80, 82) du dispositif d'accouplement (40) et le mécanisme d'engrenage (38) sont reçus et dans lequel l'arbre d'actionneur (42) est supporté, une extrémité libre de l'arbre d'actionneur (42) faisant saillie du boîtier (32, 34) et étant reliée activement à l'élément d'actionnement (26).

13. Actionneur de verrouillage de stationnement (10) selon la revendication 12, **caractérisé en ce qu'**une carte de circuit imprimé (108) est disposée dans le boîtier (32, 34), par l'intermédiaire de laquelle le moteur électrique (36) et le dispositif de commutation (96) du dispositif de couplage (40) peuvent être déclenchés, et **en ce que** la carte de circuit imprimé (108) est connectée à une interface électrique commune (106) de l'actionneur de verrouillage de stationnement (10), par l'intermédiaire de laquelle le moteur électrique (36) et le dispositif de commutation (96) peuvent chacun être connectés à une source de courant et/ou à une unité de commande.
